# EUROPEAN PATENT SPECIFICATION

(11) **EP 3 046 234 B1**
(45) Date of publication and mention of the grant of the patent: **01.08.2018**
(21) Application number: 16151366.8
(22) Date of filing: 14.01.2016
(51) Int. Cl.: H02K 15/04, B21D 7/04

(54) **METHOD AND APPARATUS FOR SHAPING AT LEAST ONE ALTERNATOR BAR**
VERFAHREN UND VORRICHTUNG ZUM UMFORMEN VON MINDESTENS EINER GENERATORSTANGE
PROCÉDÉ ET APPAREIL POUR FAÇONNER AU MOINS UNE BARRE D'ALTERNATEUR

(30) Priority: 14.01.2015 IT MI20150024
(43) Date of publication of application: 20.07.2016
(73) Proprietor: Ansaldo Energia S.p.A., 16152 Genova (IT)
(72) Inventor: BARBIERI, Alessandro, 16014 CAMPOMORONE (IT); CAZZANIGA, Rodolfo, 23891 BARZANO' (IT); XIMONE, Flavia, 16167 GENOVA (IT)
(74) Representative: Andreotti, Erika

(56) References cited:
- EP-A1- 1 291 094
- EP-A1- 2 418 026
- JP-A- S5 641 754

## Description

The present invention relates to a method and an apparatus for shaping at least one bar of a winding of an alternator. In particular, the present invention relates to a method and an apparatus for shaping at least one bar of a rotor winding of an alternator of an electrical energy production plant.

Plants for the production of electrical energy usually comprise at least one rotary turbine (a steam turbine and/ or a gas turbine), which drags an alternator, which is configured to produce electrical energy.

Known alternators extend along a longitudinal axis and are provided with a fixed part, the stator, and a movable part, the rotor.

The rotor is housed on the inside of the stator and is supported by two bearings, which are fitted to the rotary shaft of the alternator.

The rotor, configured in this way, rotates dragged by the turbine.

The rotor is configured so as to generate a magnetic field, which induces an electromotive force in the stator, and is provided with electrical windings. A collector assembly, which is fitted to the rotor, receives electric current from an excitation system and supplies power to the electrical windings of the rotor.

These windings are usually defined by conductor bars, generally made of copper, which extend along a path that comprises, in the area of the heads of the rotor, curved portions.

The shaping of the conductor bars is usually carried out by means of a dedicated apparatus, which is handled by an operator, who must be very careful and an expert of this kind of operations. However, it often happens that the final geometry of the conductor bars does not fulfil the requirements of the design plan, despite the dedication and the experience of the operator. Other techniques of shaping bars are disclosed in documents EP2418026, JPS5641754, EP1291094.

Therefore, an object of the present invention is to provide an apparatus for shaping at least one alternator bar, which overcomes the drawbacks of the prior art mentioned above; in particular, an object of the present invention is to provide an apparatus for shaping at least one alternator bar, which minimizes the hand work to be carried out by the operator and ensures a bending of the bars that meets the requirements of the design plan in a simple and low-cost manner, both in functional terms and in constructive terms.

In accordance with these objects, the present invention relates to an apparatus for shaping at least one alternator bar according to claim 1.

A further object of the present invention is to provide a method for bending at least one alternator bar, which can bend the bar minimizing the hand work to be carried out by the operator and can meet the requirements of the design plan in a simple and low-cost manner.

In accordance with these objects, the present invention relates to a method for shaping at least one alternator bar, according to claim 15.

Further features and advantages of the invention will be best understood upon perusal of the following description of a non-limiting embodiment thereof, with reference to the accompanying drawing, wherein:
- figure 1 is a schematic perspective view, with parts removed for greater clarity, of the apparatus for bending at least one alternator bar according to the present invention;
- figure 2 is a schematic perspective view, with cross-sectional parts and parts removed for greater clarity, of a first detail of the apparatus of figure 1;
- figure 3 is a schematic perspective view, with cross-sectional parts and parts removed for greater clarity, of a second detail of the apparatus of figure 1;
- figure 4 is a schematic perspective view, with cross-sectional parts and parts removed for greater clarity, of a third detail of the apparatus of figure 1.

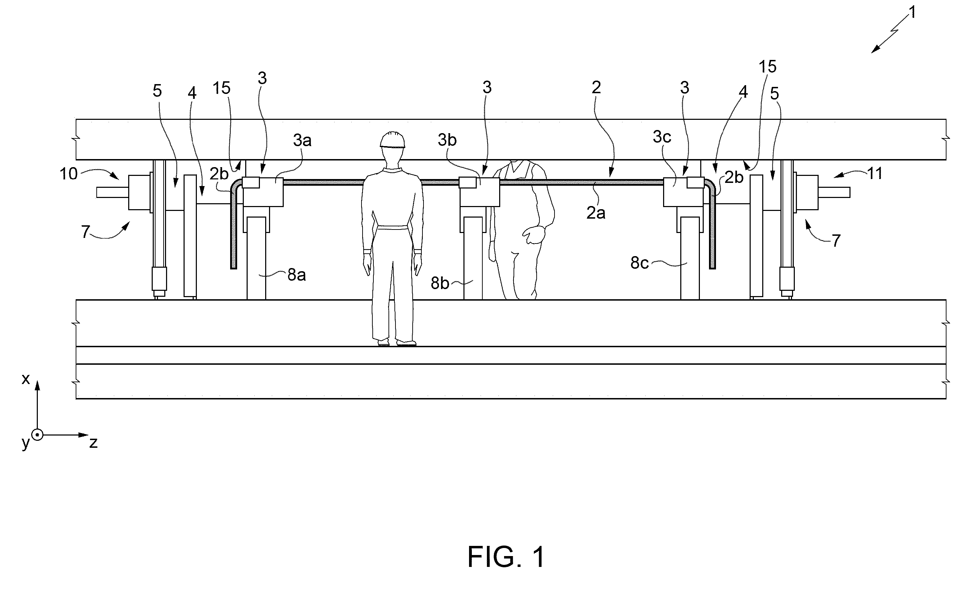

In figure 1, number 1 indicates an apparatus for shaping at least one bar 2 of an alternator (which is not shown in the accompanying figures).

Preferably, the bar 2 is a rotor conductor bar of an alternator of a plant for the production of electrical energy.

Obviously, the apparatus and the method described herein can be also applied to stator conductor bars.

The alternator bars 2 to be shaped are provided in a substantially pre-processed configuration. In detail, the bar 2 to be shaped is provided with a first central straight stroke 2a, which is adapted to be arranged in a respective rotor slot, and with two end strokes 2b, which are straight and are arranged substantially orthogonal to the first stroke 2a. The strokes 2b are shaped by the apparatus 1 according to the present invention.

Preferably, the strokes 2b are simultaneously shaped by the apparatus 1.

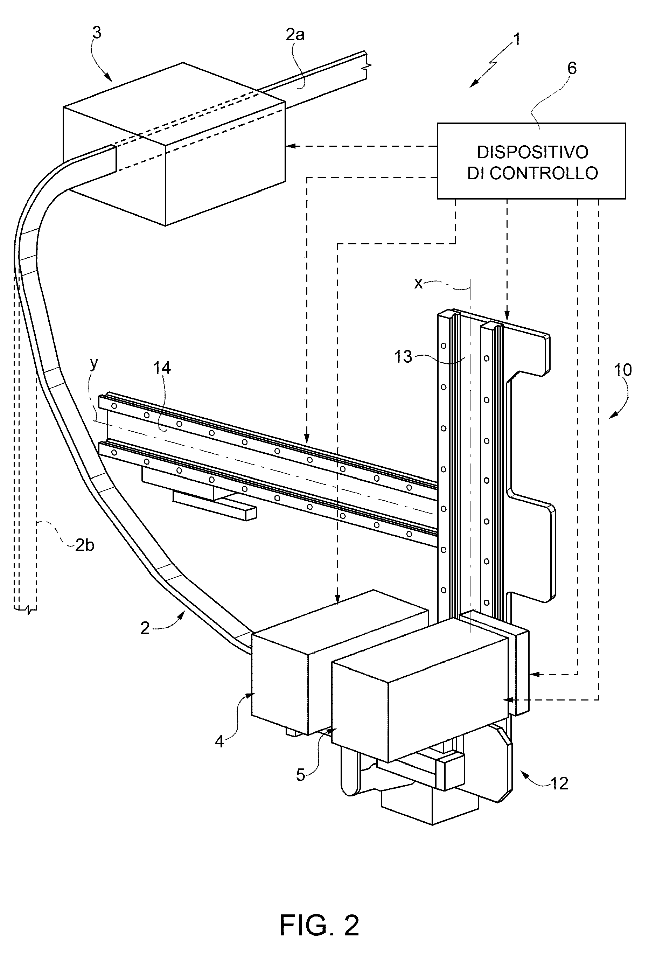

The apparatus 1 comprises a locking assembly 3, at least one shaping assembly 4 (schematically shown in figure 1 and better displayed in the following figures), at least one cutting assembly 5 (schematically shown in figure 1 and better displayed in the following figures) and a control device 6 (shown in figure 2).

In particular, the apparatus 1 comprises two shaping assemblies 4, which are configured to shape respective strokes 2b of the bar 2, and two cutting assemblies 5, which are configured to cut the strokes 2b of the bar 2 at the end of the shaping.

The apparatus 1 comprises an automatic loading and unloading device for the bars 2, which is not clearly visible in the accompanying drawings. This device is configured to pick up the bars 2 and position them in a predetermined seat.

Figure 1 shows a bar 2, which is already positioned so that the strokes 2b can be subjected to the shaping.

The apparatus 1 comprises, furthermore, a moving assembly 7 (schematically shown in figure 1 and better displayed in the following figures), which is configured to move the shaping assemblies 4 and the cutting assemblies 5 and is regulated by the control device 6.

In particular, the moving assembly 7 is configured to move each shaping assembly 4 and each cutting assembly 5 along three different directions X, Y and Z indicated in figure 1.

In the non-limiting embodiment described and shown herein, each shaping assembly 4 is coupled to a cutting assembly 5. In this way, the moving assembly 7 moves two groups, which are each made up of a shaping assembly 4 and a cutting assembly 5. The locking assembly 3 is configured to steadily lock the bars 2, so as to allow the shaping assembly 4 to act upon a stationary bar.

Preferably, the locking assembly 3 comprises three locking elements 3a, 3b and 3c, which are arranged along the stroke 2a of the bar 2.

Each locking element 3a, 3b, 3c comprises at least one locking clamp (not shown in the accompanying figures for greater clarity) and a respective supporting element 8a, 8b, 8c, which is configured to support the clamp and the bar 2.

Preferably, the operation of the locking assembly 3 is regulated by the control device 6 (figure 2). The moving assembly 7 comprises a first moving unit 10, which is adapted to move one of the two shaping assemblies 4 and one of the two cutting assemblies 5, and a second moving unit 11, which is adapted to move the other one of the two shaping assemblies 4 and the other one of the two cutting assemblies 5.

The first moving unit 10 and the second moving unit 11 are substantially identical. Therefore, for the sake of simplicity, hereinafter we will describe the sole moving unit 10.

With reference to figure 2, the moving unit 10 comprises a carriage 12, a first guide 13, a second guide 14 and a third guide 15 (partially visible in figure 1).

The carriage 12 supports the shaping assembly 4 and the cutting assembly 5 and is provided with a driving member (not shown in the accompanying figures), whose operation is controlled by the control device 6.

The first guide 13, the second guide 14 and the third guide 15 are arranged orthogonal to one another along the three directions X, Y and Z, respectively.

The carriage 12 is movable along the first guide 13.

The first guide 13 is movable along the second guide 14. The second guide 14 is movable along the third guide 15.

The first guide 13 and the second guide 14 are each provided with a carriage and a driving member (not shown in the accompanying figures), which are arranged at the back of the respective guide 13 and 14 and are regulated by the control device 6.

The controlled movements of the carriage 12, of the first guide 13 and of the second guide 14 allow the shaping assembly 4 and the cutting unit 5 to be positioned along the portion of the bar 2b to be shaped.

According to a first variant of the invention, the moving units 10, 11 are cable moving units.

In this way, one can avoid moving the bar 2, which would require large moving spaces and can cause risky situations for operators.

The shaping assembly 4 is preferably configured to shape one bar 2 at a time.

In this way, one can avoid simultaneously shaping bars having a different elastic spring backs, which, thus, react differently to the shaping action.

In particular, the shaping assembly 4 is preferably configured to shape the bar 2 so that the portion of the bar 2 subjected to the shaping has the shape of a polygon section resembling a circumference portion (see the shaped portion of the bar 2 visible in figure 2).

In other words, the shaping assembly 4 is configured to shape the bar 2 so that the portion of the bar 2 subjected to the shaping has a shape defined by a plurality of straight strokes having a given length and a given slope.

In this way, one can avoid using a plurality of apparatuses that are especially built to create shapes having a different bend radius.

Therefore, in order to obtain a different bend radius, it is sufficient to simply change the number and the length of the broken lines that will define the bar.

As a matter of fact, the number of broken lines determines the width of the bending, whereas the length of each straight stroke defines the shaping radius.

Furthermore, the shaping of the bar 2 according to a polygonal chain is more stable compared to the shaping that could be obtained so far with the prior art. Indeed, in the vertices of each single straight stroke there is an axial load that is such as to steadily deform, in one single phase, the copper defining the bar 2.

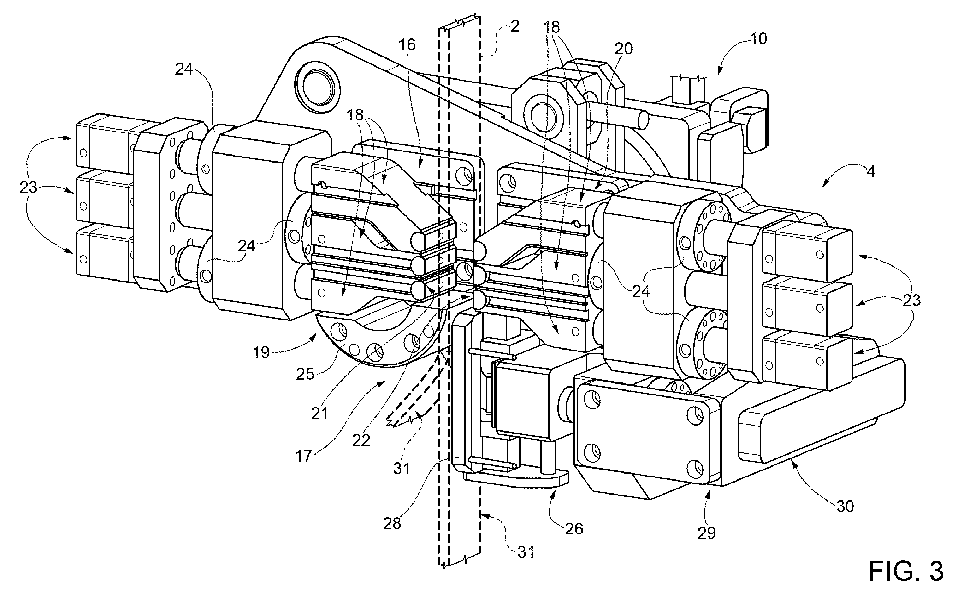

With reference to figure 3, the shaping assembly 4 comprises a clamping unit 16 and a deformation unit 17, which are arranged in close succession, so as to obtain the shaping of the bar 2.

As a matter of fact, the bar 2 is kept in a given position by the clamping unit 16 and is properly deformed by the deformation unit 17.

The clamping unit 16 comprises a plurality of clamping elements 18 which can be positioned independently from one another so as to define a clamp that is adaptable to the shape of the portion of the bar 2 to be clamped. By so doing, the clamping unit 16 can keep in position both straight strokes of the bar 2 and curved strokes.

In particular, the clamping elements 18 are divided into an inner group 19 and an outer group 20.

In the non-limiting example described and shown herein, the inner group 19 comprises three clamping elements 18, which are arranged beside one another so as to substantially define an inner clamping surface 21, and the outer group 20 comprises three further clamping elements 18, which are arranged beside one another so as to substantially define an outer clamping surface 22, which faces the inner clamping surface 21.

In use, the clamping elements 18 of the inner group 19 and of the outer group 20 are moved so as to get close to and strike against the respective portion of the bar 2, and then they are kept in position so as to exert a force that is able to counter the bending moment exerted by the deformation unit 17.

In particular, each clamping element 18 is coupled to a respective actuator 23, which is regulated by the control device 6.

The actuator 23 is regulated so as to determine a controlled movement of the respective clamping element 18 as it gets close to and strikes against the bar 2, in such a way that undesired deformations of the bar 2 are avoided, and it is regulated so as to determine a locking of the respective clamping element 18 that is stable and resistant to the bending moment.

Preferably, the actuator 23 is a pneumatic actuator, preferably with a small bore (for example, 40 mm), provided with a respective tightening bushing 24. The tightening bushing 24 preferably is hydraulic.

In the non-limiting example described and shown herein, each tightening bushing 24 is configured to keep the respective actuator 23 in a static position and to ensure an axial hold of approximately 5 kN.

The deformation unit 17, as already mentioned above, is arranged downstream of the clamping unit 16 and is configured to exert a bending moment upon the portion of the bar 2 projecting from the clamping unit 16.

In the non-limiting example described and shown herein, the deformation unit 17 comprises an abutment element 25 and a pressing element 26 configured to apply a pressing force on the portion of the bar 2, which comes out from the clamping unit 16 and which is arranged between the abutment element 25 and the pressing element 26.

The pressing element 26 comprises a head 28 and an actuator 29. The actuator 29 is a hydraulic actuator.

Preferably, the pressing element 26 can be oriented thanks to a support system 30 that is schematically shown in figure 2. In this way, the pressing element 16 can exert the pressing force along a preferred direction of deformation.

Preferably, the support system 30 comprises a rotation member (schematically shown in figure 3) comprising a precision reduction gear with a toothed belt.

The abutment element 25 is configured to create a lever point and enable the bending of the bar 2 subjected to the pressing force of the pressing element 26.

In the non-limiting example described and shown herein, the abutment element 25 has an outer profile that is concave and substantially semicircular.

Preferably, the pressing element 26 is arranged so as to apply a pressing force on the face 31 of the bar 2 which has a concave profile after the deformation (see also figure 2). In other words, the pressing element 26 is arranged so as to exert the deformation force upon the face 31 of the bar 2 that is considered as the "outer" face.

By so doing, the geometric shaping of the bar 2 is more precise both if you are using soft copper (weak and more ductile) and if you are using rigid copper (provided with a high elasticity).

Furthermore, thanks to the fact that the pressing element 26 is arranged so as to exert the deformation force upon the so-called "outer" face 31 of the bar 2, the elongation of the bar 2, which might be caused by deformation forces, accumulates in the end part of the bar 2, which will be cut by the cutting assembly 5.

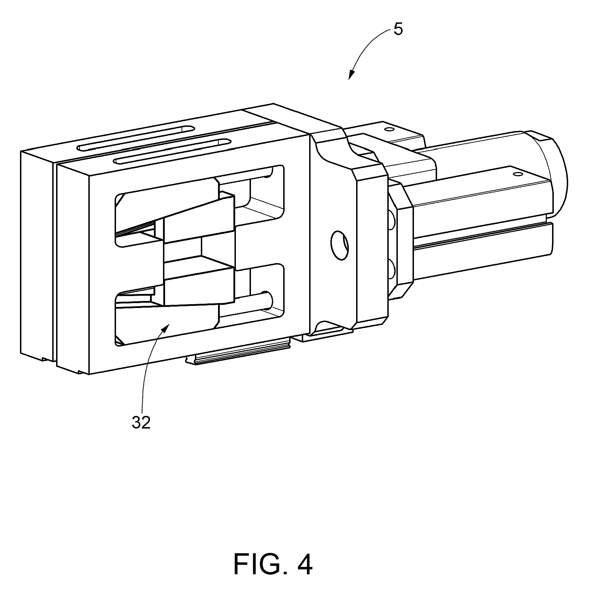

With reference to figure 4, the cutting assembly 5 is configured to cut the bar 2 at the end of the shaping cycle by means of a hydraulically-operated cutting device 32.

As a matter of fact, the cutting assembly 5 is arranged downstream of the shaping assembly 4 (see figure 1) .

Advantageously, the fact that the cut is carried out after the shaping allows operators to correct possible mistakes made during the shaping step.

Furthermore, the cutting assembly 5 arranged downstream of the shaping assembly 4 allows waste swarf to be minimized, thus preserving the general cleanliness of the apparatus 1.

Preferably, the cutting assembly 5 is coupled to the respective shaping assembly 4 so that the first moving unit 10 and the second moving unit 11 move not only the shaping assembly 4 but also the respective cutting assembly 5. By so doing, the positioning of the cutting assembly 5 along the bar 2 is regulated by the control device 6.

In particular, the control device 6, at the end of the shaping cycle, is configured to position the cutting assembly 5 at the desired height, which includes the possible deformation error.

Advantageously, the cutting assembly 5 described and shown herein is very compact and can be moved within very small spaces.

In use, the method for shaping at least one alternator bar 2 according to the present invention substantially comprises the steps of:
- automatically loading one bar 2 at a time by means of an automatic loading and unloading device for the bars 2;
- locking the bar 2 in a given position by means of the locking assembly 3;
- moving the shaping assemblies 4 by means of the moving assembly 7, so that each shaping assembly 4 is arranged in the area of a first portion of the bar 2 to be shaped;
- adjusting the orientation of the pressing element 26 by means of the support system 30;
- shaping the respective first portion of the bar 2 by means of the shaping assembly 4;
- moving the shaping assemblies 4 by means of the moving assembly 7 so as to reach the area of a second portion of the bar 2 to be shaped and adjusting again the orientation of the pressing element 26 by means of the support system 30
- shaping said second portion by means of the shaping assembly 4 and, if necessary, repeating the last two steps of the method for further portions of the bar 2, until the shaping of the entire bar 2 is completed;
- cutting the bar 2 at the desired length by means of the cutting assembly 5;
- automatically unloading the shaped bar 2 by means of the automatic loading and unloading device for the bars 2.

Preferably, the portion of the bar 2 that is first shaped by the shaping assembly 4 belongs to the second stroke 2b of the bar 2 and is proximal to the first stroke 2a.

Then the shaping assembly 4 is moved so as to progressively shape all the portions following the second stroke 2b of the bar 2, which are farther and farther from the first stroke 2a. In this way, possible mistakes due to the elongation of the bar 2 during its processing are gathered in the last distal portion of the second stroke 2b, which will be cut.

Advantageously, all the operations listed above are carried out and regulated by the control device 6.

Basically, the control device 6 is responsible for the numerical control of the entire apparatus 1.

Therefore, with the numerical control of the control device 6, the apparatus 1 can automatically shape one bar 2 at a time, thus creating a polygonal chain of straight strokes resembling the desired circumference.

In this way, the apparatus 1 is designed to operate with fixed parameters, except for the definition of the number and the length of the strokes making up the polygonal chain to be obtained. These parameters, indeed, can be changed based on the requirements of the design plan.

Thanks to these aspects, the apparatus 1 according to the present invention determines a shaping of the bar 2 that is quick and, at the same time, precise.

As a matter of fact, studies carried out have shown that the bars 2 shaped with the apparatus 1 according to the present invention are affected by less than decimal deviations.

Furthermore, the apparatus 1 according to the present invention is very compact and can operate along strokes of the bar 2 that are not very long. This is mainly due to the structure of the clamping unit 14, which is provided with clamping elements 17 that adjust to the shape of the bar 2.

Finally, it is clear that the apparatus and the method described herein can be subjected to changes and variations, without for this reason going beyond the scope of protection of the appended claims.

## Claims

1. Apparatus for shaping at least one bar (2) of an alternator comprising:
- at least one shaping assembly (4) configured to shape at least one portion of the bar (2);
- a moving assembly (7) configured to move at least the shaping assembly (4) with respect to the bar (2); wherein the moving assembly (7) is configured to move at least the shaping assembly (4) along three different directions which are orthogonal one to the other;
the apparatus being **characterized in that** the moving assembly (7) comprises at least one moving unit (10, 11) provided with a carriage (12), coupled to the shaping assembly (4), a first guide (13) configured to guide the movement of the carriage (12), a second guide (14) configured to guide the movement of the first guide (13), and a third guide (15), configured to guide the movement of the second guide (14).

2. Apparatus according to claim 1, wherein the shaping assembly (4) is configured to shape one bar (2) at a time.

3. Apparatus according to any one of the foregoing claims, wherein the shaping assembly (4) is configured to shape the bar (2) so as the portion of the bar (2) which is shaped has a shape defined by a plurality of straight strokes.

4. Apparatus according to any one of the foregoing claims, wherein the shaping assembly (4) comprises a clamping unit (16), configured to clamp the bar (2) in a determined position, and a deformation unit (17), configured to deform the bar (2).

5. Apparatus according to claim 4, wherein the clamping unit (16) and the deformation unit (17) are arranged in close succession.

6. Apparatus according to claim 4 or 5, wherein the clamping unit (16) comprises a plurality of clamping elements (18) which can be positioned independently one from the other so as to define a clamp adaptable to the shape of the portion of the bar (2) to be clamped.

7. Apparatus according to claim 6, wherein each clamping element (18) is coupled to a respective actuator (23) configured to move the respective clamping element (18) in abutment against the respective portion of the bar (2), and to block the clamping element (18) in said position.

8. Apparatus according to claim 7, wherein the deformation unit (17) comprises an abutment element (25) and a pressing element (26) configured to apply a pressing force on the portion of the bar (2), which comes out from the clamping unit (16) and which is arranged between the abutment element (25) and the pressing element (26).

9. Apparatus according to claim 8, wherein the pressing element (26) can be oriented.

10. Apparatus according to claim 8 or 9, wherein the pressing element (26) is arranged so as to apply a pressing force on a face (31) of the bar (2) which has a concave profile after the deformation.

11. Apparatus according to any one of the foregoing claims, comprising at least one cutting assembly (5) configured to cut the bar (2) and arranged downstream the shaping assembly (4).

12. Apparatus according to claim 11, wherein the cutting assembly (5) is coupled to the shaping assembly (4).

13. Apparatus according to any one of the foregoing claims, comprising a control device (6) configured to control the shaping assembly (4) and the moving assembly (7).

14. Apparatus according to any one of the foregoing claims comprising a further shaping assembly (4) configured to shape at least one further portion of the bar (2) and moved by the moving assembly (7) with respect to the bar (2).

15. Method for shaping at least one bar (2) of an alternator comprising the steps of:
- positioning at least one shaping assembly (4) by a first portion of the bar (2) to be shaped; the step of positioning at least one shaping assembly (4) is performed by a moving assembly (7); the moving assembly being configured to move at least the shaping assembly (4) along three different directions which are orthogonal one to the other;
- shaping the first portion of the bar (2) by means of the shaping assembly (4);
the method being **characterized in that** the moving assembly (7) comprises at least one moving unit (10, 11) provided with a carriage (12), coupled to the shaping assembly (4), a first guide (13) configured to guide the movement of the carriage (12), a second guide (14) configured to guide the movement of the first guide (13), and a third guide (15), configured to guide the movement of the second guide (14).

16. Method according to claim 15, comprising the step of blocking the bar (2) in a determined position before the shaping step.

17. Method according to claim 15 or 16, comprising the step of cutting the bar (2) by means of a cutting assembly (5) after the shaping step.

18. Method according to any one of claims from 15 to 17, wherein the bar (2) to be shaped is provided with a first straight stroke (2a), adapted to be arranged, in use, in a first rotor slot, and with at least a second straight stroke (2b) arranged substantially orthogonal to the first straight stroke (2a); the step of shaping comprising starting to shape the bar (2) from a first portion of the bar (2) of the second straight stroke (2b) of the bar (2) which is proximal to the first straight stroke (2a).

## Patentansprüche

1. Vorrichtung zum Umformen von mindestens einer Generatorstange (2), bestehend aus:
- mindestens einer Umformvorrichtung (4), die so konfiguriert ist, dass sie mindestens ein Teilstück der Stange (2) umformen kann;
- einer Bewegungsvorrichtung (7), die so konfiguriert ist, dass sie mindestens die Umformvorrichtung (4) in Bezug zur Stange (2) bewegen kann; **dadurch gekennzeichnet, dass** die Bewegungsvorrichtung (7) so konfiguriert ist, dass sie mindestens die Umformvorrichtung (4) in drei verschiedene orthogonal zueinander ausgerichtete Richtungen bewegen kann;
wobei die Vorrichtung **dadurch gekennzeichnet ist, dass** die Bewegungsvorrichtung (7) mindestens eine Bewegungseinheit (10, 11) aufweist, die mit einem Schlitten (12) versehen ist, mit der Umformvorrichtung (4) gekoppelt, ferner eine erste Führungseinheit (13), die so konfiguriert ist, dass Sie die Bewegung des Schlittens (12) lenkt, ferner eine zweite Führungseinheit (14), die so konfiguriert ist, dass sie die Bewegung der ersten Führungseinheit (13) lenkt und ferner eine dritte Führungseinheit (15), die so konfiguriert ist, dass sie die Bewegung der zweiten Führungseinheit (14) lenkt.

2. Vorrichtung nach Anspruch 1, **dadurch gekennzeichnet, dass** die Umformvorrichtung (4) so konfiguriert ist, dass sie jeweils eine Stange (2) gleichzeitig umformen kann.

3. Vorrichtung nach einem der vorstehenden Ansprüche, **dadurch gekennzeichnet, dass** die Umformvorrichtung (4) so konfiguriert ist, dass sie die Stange (2) umformen kann, sowie das Teilstück der Stange (2) umformen kann, welches umgeformt wurde und sich durch eine Form auszeichnet, welches einer Vielzahl von geraden Teilstücken entspricht.

4. Vorrichtung nach einem der vorstehenden Ansprüche, **dadurch gekennzeichnet, dass** die Umformvorrichtung (4) eine Spannvorrichtung (16) umfasst, die so konfiguriert ist, dass sie die Stange (2) in einer bestimmten Lage festspannt, sowie eine Verformungsvorrichtung (17) umfasst, die so konfiguriert ist, dass sie die Stange (2) verformt.

5. Vorrichtung nach Anspruch 4, **dadurch gekennzeichnet, dass** die Spannvorrichtung (16) und die Verformungsvorrichtung (17) so angeordnet sind, dass sie eng aufeinander folgen.

6. Vorrichtung nach Anspruch 4 oder 5, **dadurch gekennzeichnet, dass** die Spannvorrichtung (16) aus einer Vielzahl von Spannelementen (18) besteht, die so positioniert werden können, dass sie zueinander eine unabhängige Lage einnehmen und somit eine Schelle bilden, die an die Form des Teils der Stange (2) angepasst werden kann, der festgespannt werden soll.

7. Vorrichtung nach Anspruch 6, **dadurch gekennzeichnet, dass** jedes Spannelement (18) mit einem entsprechenden Stellantrieb (23) verbunden ist, der so konfiguriert ist, um das jeweilige Spannelement (18) so zu bewegen, dass es am jeweiligen Teilstück der Stange (2) anliegt und das Spannelement (18) in dieser Position festhält.

8. Vorrichtung nach Anspruch 7, **dadurch gekennzeichnet, dass** die Verformungsvorrichtung (17) aus einem Anliegeelement (25) sowie einem Druckelement (26) besteht, die so konfiguriert sind, um einen Druck auf das Teilstück der Stange (2) auszuüben, welches aus der Spanneinheit (16) herausragt und zwischen dem Anliegeelement (25) und dem Druckelement (26) angeordnet ist.

9. Vorrichtung nach Anspruch 8, **dadurch gekennzeichnet, dass** das Druckelement (26) ausgerichtet werden kann.

10. Vorrichtung nach Anspruch 8 oder 9, **dadurch gekennzeichnet, dass** das Druckelement (26) so angeordnet ist, um eine Druckkraft auf eine Fläche (31) der Stange (2) auszuüben, welche nach der Verformung ein konkaves Profil aufweist.

11. Vorrichtung nach einem der vorstehenden Ansprüche, bestehend aus mindestens einem Schneidwerk (5), welches so konfiguriert ist, um die Stange (2) abzuschneiden, und welches sich hinter der Umformvorrichtung (4) befindet.

12. Vorrichtung nach Anspruch 11, **dadurch gekennzeichnet, dass** das Schneidwerk (5) mit der Umformvorrichtung (4) verbunden ist.

13. Vorrichtung nach einem der vorstehenden Ansprüche, bestehend aus einem Steuergerät (6), das so konfiguriert ist, um die Umformvorrichtung (4) und die Bewegungsvorrichtung (7) zu steuern.

14. Vorrichtung nach einem der vorstehenden Ansprüche mit einer weiteren Umformvorrichtung (4), die so konfiguriert ist, um mindestens ein weiteres Teilstück der Stange (2) umzuformen und von der Bewegungsvorrichtung (7) in Bezug auf die Stange (2) verschoben wird.

15. Verfahren zum Umformen von mindestens einer Generatorstange (2), umfassend folgende Verfahrensschritte:
- Positionierung mindestens einer Umformvorrichtung (4) an einem ersten Teilstück der umzuformenden Stange (2); der Schritt der Positionierung von mindestens einer Umformvorrichtung (4) wird von der Bewegungsvorrichtung (7) ausgeführt; die Bewegungsvorrichtung ist so konfiguriert, um mindestens die Umformvorrichtung (4) in drei verschiedene Richtungen zu bewegen, die orthogonal zueinander ausgerichtet sind;
- Umformen des ersten Teilstücks der Stange (2) mithilfe der Umformvorrichtung (4);
das Verfahren ist **dadurch gekennzeichnet, dass** die Bewegungsvorrichtung (7) mindestens eine Bewegungseinheit (10, 11) aufweist, die mit einem Schlitten (12) versehen ist, mit der Umformvorrichtung (4) gekoppelt, ferner eine erste Führungseinheit (13), die so konfiguriert ist, dass Sie die Bewegung des Schlittens (12) lenkt, ferner eine zweite Führungseinheit (14), die so konfiguriert ist, dass sie die Bewegung der ersten Führungseinheit (13) lenkt und ferner eine dritte Führungseinheit (15), die so konfiguriert ist, dass sie die Bewegung der zweiten Führungseinheit (14) lenkt.

16. Verfahren nach Anspruch 15, bestehend aus dem Schritt des Festspannens der Stange (2) in einer vorgesehenen Lage vor der Durchführung des Umformschrittes.

17. Verfahren nach Anspruch 15 oder 16, bestehend aus dem Abschneiden der Stange (2) durch ein Schneidwerk (5) nach Durchführung des Umformschrittes.

18. Verfahren nach einem der Ansprüche 15 bis 17, **dadurch gekennzeichnet, dass** die umzuformende Stange (2) ein erstes gerades Teilstück (2a) erhält, welches für eine bestimmte Anordnung angepasst wird, um in einem ersten Rotorplatz eingesetzt zu werden und mindestens ein zweites gerades Teilstück (2b) erhält, dass im Wesentlichen so angeordnet ist, um orthogonal zum ersten Teilstück (2a) zu verlaufen; der Verfahrensschritt des Umformens der Stange (2) aus einem ersten Teilstück der Stange (2), welches unmittelbar neben dem ersten geraden Teilstück verläuft.

## Revendications

1. Appareil pour façonner au moins une barre (2) d'un alternateur comprenant :
au moins un ensemble de façonnage (4) configuré pour façonner au moins une partie de la barre (2) ;
un ensemble de déplacement (7) configuré pour déplacer au moins l'ensemble de façonnage (4) par rapport à la barre (2) ;
dans lequel l'ensemble de déplacement (7) est configuré pour déplacer au moins l'ensemble de façonnage (4) le long de trois directions différentes qui sont orthogonales les unes par rapport aux autres ;
l'appareil étant **caractérisé en ce que** l'ensemble de déplacement (7) comprend au moins une unité de déplacement (10, 11) prévue avec un chariot (12), couplée à l'ensemble de façonnage (4), un premier guide (13) configuré pour guider le déplacement du chariot (12), un deuxième guide (14) configuré pour guider le déplacement du premier guide (13), et un troisième guide (15), configuré pour guider le déplacement du deuxième guide (14).

2. Appareil selon la revendication 1, dans lequel l'ensemble de façonnage (4) est configuré pour façonner une barre (2) à la fois.

3. Appareil selon l'une quelconque des revendications précédentes, dans lequel l'ensemble de façonnage (4) est configuré pour façonner la barre (2) de sorte que la partie de la barre (2) qui est façonnée a une forme définie par une pluralité de courses droites.

4. Appareil selon l'une quelconque des revendications précédentes, dans lequel l'ensemble de façonnage (4) comprend une unité de serrage (16) configurée pour serrer la barre (2) dans une position déterminée, et une unité de déformation (17) configurée pour déformer la barre (2).

5. Appareil selon la revendication 4, dans lequel l'unité de serrage (16) et l'unité de déformation (17) sont agencées en succession immédiate.

6. Appareil selon la revendication 4 ou 5, dans lequel l'unité de serrage (16) comprend une pluralité d'éléments de serrage (18) qui peuvent être positionnés indépendamment les uns des autres afin de définir une pince pouvant s'adaptée à la forme de la partie de la barre (2) à serrer.

7. Appareil selon la revendication 6, dans lequel chaque élément de serrage (18) est couplé à un actionneur (23) respectif configuré pour déplacer l'élément de serrage (18) respectif en butée contre la partie respective de la barre (2) et pour bloquer l'élément de serrage (18) dans ladite position.

8. Appareil selon la revendication 7, dans lequel l'unité de déformation (17) comprend un élément de butée (25) et un élément de pression (26) configuré pour appliquer une force de pression sur la partie de la barre (2), qui sort de l'unité de serrage (16) et qui est agencée entre l'élément de butée (25) et l'élément de pression (26).

9. Appareil selon la revendication 8, dans lequel l'élément de pression (26) peut être orienté.

10. Appareil selon la revendication 8 ou 9, dans lequel l'élément de pression (26) est agencé pour appliquer une force de pression sur une face (31) de la barre (2) qui a un profil concave après la déformation.

11. Appareil selon l'une quelconque des revendications précédentes, comprenant au moins un ensemble de coupe (5) configuré pour couper la barre (2) et agencé en aval de l'ensemble de façonnage (4).

12. Appareil selon la revendication 11, dans lequel l'ensemble de coupe (5) est couplé à l'ensemble de façonnage (4).

13. Appareil selon l'une quelconque des revendications précédentes, comprenant un dispositif de commande (6) configuré pour commander l'ensemble de façonnage (4) et l'ensemble de déplacement (7).

14. Appareil selon l'une quelconque des revendications précédentes, comprenant un autre ensemble de façonnage (4) configuré pour façonner au moins une autre partie de la barre (2) et déplacé par l'ensemble de déplacement (7) par rapport à la barre (2).

15. Procédé pour façonner au moins une barre (2) d'un alternateur, comprenant les étapes consistant à :
positionner au moins un ensemble de façonnage (4) par une première partie de la barre (2) à façonner ; l'étape consistant à positionner au moins un ensemble de façonnage (4) est réalisée par un ensemble de déplacement (7) ; l'ensemble de déplacement étant configuré pour déplacer au moins l'ensemble de façonnage (4) le long de trois directions différentes qui sont orthogonales entre elles ;
façonner la première partie de la barre (2) au moyen de l'ensemble de façonnage (4) ;
le procédé étant **caractérisé en ce que** l'ensemble de déplacement (7) comprend au moins une unité de déplacement (10, 11) prévue avec un chariot (12) couplé à l'ensemble de façonnage (4), un premier guide (13) configuré pour guider le déplacement du chariot (12), un deuxième guide (14) configuré pour guider le déplacement du premier guide (13) et un troisième guide (15) configuré pour guider le déplacement du deuxième guide (14).

16. Procédé selon la revendication 15, comprenant l'étape consistant à bloquer la barre (2) dans une position déterminée avant l'étape de façonnage.

17. Procédé selon la revendication 15 ou 16, comprenant l'étape consistant à couper la barre (2) au moyen d'un ensemble de coupe (5) après l'étape de façonnage.

18. Procédé selon l'une quelconque des revendications 15 à 17, dans lequel la barre (2) à façonner est prévue avec une première course droite (2a) adaptée pour être agencée, à l'usage, dans une première fente de rotor, et avec au moins une seconde course droite (2b) agencée de manière sensiblement orthogonale par rapport à la première course droite (2a) ; l'étape de façonnage comprenant l'étape consistant à commencer par façonner la barre (2) à partir d'une première partie de la barre (2) de la seconde course droite (2b) de la barre (2) qui est proximale par rapport à la première course droite (2a).
